(19) Europäisches Patentamt
European Patent Office
Office européen des brevets

(11) **EP 2 807 457 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **13701447.8**

(22) Anmeldetag: **25.01.2013**

(51) Int Cl.:
*G01F 23/26* (2006.01)   *H03K 17/95* (2006.01)

(86) Internationale Anmeldenummer:
**PCT/EP2013/051446**

(87) Internationale Veröffentlichungsnummer:
**WO 2013/110764 (01.08.2013 Gazette 2013/31)**

(54) **FÜLLSTANDSMESSGERÄT**

FILL LEVEL MEASURING DEVICE

APPAREIL DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2012 DE 102012201226**

(43) Veröffentlichungstag der Anmeldung:
**03.12.2014 Patentblatt 2014/49**

(73) Patentinhaber: **IFM Electronic GmbH**
**45128 Essen (DE)**

(72) Erfinder: **HOCH, Werner**
**88069 Tettnang (DE)**

(56) Entgegenhaltungen:
**EP-A2- 0 052 215      DE-A1- 2 521 687**
**DE-B4-102008 027 921**

**Beschreibung**

Die Erfindung betrifft ein Füllstandmessgerät zur Ermittlung des Füllstandes eines Mediums in einem Behälter nach dem Oberbegriff des Patentanspruchs 1.

Kapazitive Füllstandssensoren werden seit langem sowohl als Grenzschalter als auch zur Medienbestimmung eingesetzt. Ihre wesentlichen Vorteile bestehen darin, dass sie keine mechanisch bewegten Teile aufweisen und durch eine aus elektrisch isolierendem Material bestehende Gehäusewand "hindurch" messen können, d. h. Dichtungsprobleme vermeidbar sind.

Von der Anmelderin werden elektronische Füllstandssensoren für wasserbasierte Medien unter der Bezeichnung LMT100 und solche für Öle und Fette unter der Bezeichnung LMT110 hergestellt und vertrieben.

Die DE102008027921 B4 zeigt eine Admittanzmeßschaltung für einen kapazitiven Füllstandssensor, bei dem eine als Resonator ausgebildete Sonde und eine nicht vom Medium beeinflussbare Referenzimpedanz mit einem von einer durchstimmbaren Signalquelle erzeugten Frequenzspektrum beaufschlagt werden. Ihr Antwortverhalten gibt Auskunft über den Füllstand und eventuelle Anhaftungen, aber auch über die Art des Mediums. Wegen der aus Halbleiterbauelementen bestehenden Steuereinheit ist deren Dauerbetriebstemperatur auf 85°C begrenzt. Das ist in vielen Fällen aber nicht ausreichend. Das Problem erscheint zunächst durch die räumliche Trennung von Sonde und Steuereinheit lösbar. Da diese Geräte aber mit sehr hohen Frequenzen im Bereich deutlich über 100 MHz arbeiten, verschlechtert sich ihr Resonanzverhalten und auch ihre Messgenauigkeit trotz geschirmter Verbindungsleitungen spürbar.

Die US4259865A zeigt solches ein kapazitives Füllstandsmessgerät mit räumlich getrennten und damit auch thermisch entkoppelten Mess- und Referenzkapazitäten. Gemessen werden die Impedanzen der beiden Sonden. Dabei dient eine der beiden Sonden als Referenz für die Einstellung der Sendespannung. Eine Arbeitsfrequenz ist nicht angegeben. Wegen des Spannungsabfalls auf den vergleichsweise langen Leitungen und deren Störanfälligkeit ist diese Schaltung ungenau und für hohe Frequenzen im Bereich ab 10 MHz nicht geeignet. Der Temperaturgang kann durch eine Steuerspannung VR kompensiert werden. Deren Erzeugung aber aufwändig und fehleranfällig ist.

Die US6107924A zeigt ein Messgerät zur Impedanzmessung im Frequenzbereich zwischen 10 MHz und 300 MHz. Der Sensor besteht aus einem transformatorisch an ein Koaxialkabel angepassten Schwingkreis. Das vom Abschlusswiderstand beeinflusste Stehwellenverhältnis in der Koaxialleitung wird mit einem Richtkoppler gemessen.

Hier geht die Qualität der Koaxialleitung, insbesondere auch die durch Kontaktstellen oder Steckverbinder hervorgerufenen stehenden Wellen in das Messergebnis ein. Die Erzeugung eines Referenzsignals ist schwierig. Das Messprinzip erfordert eine von der Frequenz abhängige Mindestlänge des Koaxialkabels. Der Richtkoppler kann zwar in der Nähe des Oszillators, aber nicht in der Nähe des Sensors angeordnet sein. Das erscheint zunächst als Vorteil, kann aber die in der Schrift vorgeschlagene zusätzliche Temperaturmessung erfordern.

Die Aufgabe der Erfindung besteht darin, die genannten Nachteile zu überwinden. Es soll ein temperaturkompensierter, für hohe Arbeitsfrequenzen geeigneten Füllstandssensor angeben werden. Insbesondere soll die Einsatztemperatur der oben genannten Füllstandssensoren unter Beibehaltung der Messgenauigkeit erweitert werden.

Diese Aufgabe wird entsprechend dem Kennzeichen des Patentanspruchs 1 gelöst.

Der wesentliche Erfindungsgedanke besteht darin, nicht nur den Strom oder die Spannung an der Sonde, sondern deren Impedanz zu bestimmen. Dazu werden die Spannung und der Strom unmittelbar an der Sonde, und nicht wie im Stand der Technik gezeigt, an einer räumlich abgesetzten Steuereinheit gemessen.

Zu diesem Zweck werden die hochfrequenten Signale in der Sonde gleichgerichtet, gefiltert und auf niederohmig abgeschlossenen Leitungen als sehr niederfrequente Signale bzw. als Gleichspannungen zur Steuereinheit übertragen.

Die Erfassung der hochfrequenten Signale in der Sonde ist in zweierlei Hinsicht vorteilhaft. Stehende Wellen in der Hochfrequenzleitung bleiben wegen der geregelten Sendespannung praktisch ohne Einfluss auf die Messung. So kann das Sendesignal nahezu beliebige Formen annehmen, beispielsweise auch rechteckförmig sein.

Parasitäre Kapazitäten der Messleitungen stören die Messung ebenfalls nicht, weil sie die übertragenen Gleichspannungssignale kaum beeinflussen können.

Ein weiterer Vorteil der erfindungsgemäßen Anordnung besteht darin, dass Dioden als einzige Halbleiterbauelemente in der Sonde verbleiben, und den Einsatztemperaturbereich bestimmen. Die maximal zulässige Sperrschichttemperatur der Dioden beträgt 150°C. Sie sind vorteilhaft in einem gemeinsamen Gehäuse untergebracht und damit optimal thermisch miteinander gekoppelt. So haben die gemessenen Strom- und Spannungswerte denselben Temperaturgang.

Die Erfindung wird anhand der Zeichnung näher erläutert.

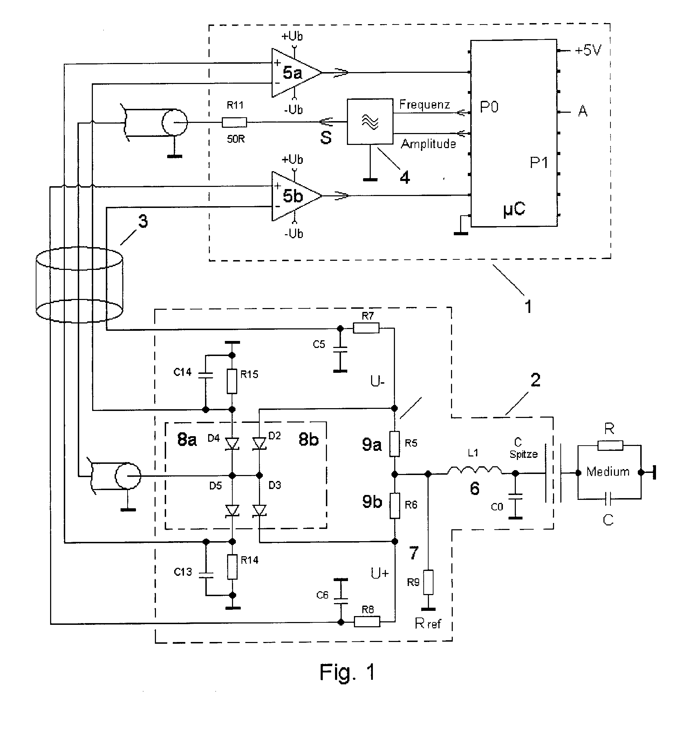

Die Fig. 1 zeigt ein erfindungsgemäßes Füllstandsmessgerät. Die Steuereinheit 1 enthält als Auswerteeinheit einen Mikrocontroller μC, sowie einen Hochfrequenzgenerator 4, hier ein durchstimmbarer Sinusoszillator, sowie einen ersten Messverstärker 5a und einen zweiten Messverstärker 5b. Die Steuereinheit 1 ist über eine teilweise geschirmte Verbindungsleitung 3 mit einer Sonde 2 verbunden. Die Sonde 2 weist eine Messimpedanz 6 auf. Diese enthält eine Induktivität L1 von einigen 100 nH. Die parasitäre Kapazität zum Gehäuse ist mit C0 bezeichnet und beträgt einige pF. Sie kann zu Abstimmungszwecken erhöht werden. Die Kapazität zum Medium liegt in der gleichen Größenordnung. Der Widerstand R Medium und die Kapazität C Medium stellen die zu vermessende Impedanz des Mediums dar. Die Referenzimpedanz 7 besteht aus einem thermisch mit der Sonde 2 gekoppelten, aber nicht vom Medium beeinflussbaren vorzugsweise ohmschen Widerstand.

Die Sonde 2 enthält weiterhin einen ersten Spitzenwert-Gleichrichter 8a zur Erfassung der Sendespannung. Er umfasst neben den Dioden D4 und D5 die Glättungskondensatoren C13 und C14 mit ihren Lastwiderständen R14 und R15. Hier entsteht eine der Sendeamplitude entsprechende Gleichspannung, die der Steuereinheit 1 zugeführt wird.

Der zweite Spitzenwert-Gleichrichter 8b zerlegt das Sendesignal in seine beiden Halbwellen. Die Halbwellen werden hinter den Messwiderständen 9a und 9b von ca. 10 Ohm wieder zusammengesetzt und dem bereits oben beschrieben Resonator 6, sowie der parallel geschalteten Referenzimpedanz 7 zugeführt. Die Referenzimpedanz besteht aus einem ohmschen Widerstand und ist deshalb frequenzunabhängig. Die über den Messwiderständen 9a und 9b abfallende Spannung repräsentiert den Sondenstrom. Diese Spannung wird durch die Tiefpässe R7/C5 und R8/C6 geglättet und über die Verbindungsleitung 3 ebenfalls der Steuereinheit 1 zugeführt.

Beschreibung der Funktionsweise:

Der Hochfrequenzgenerator 4 erzeugt ein Sendesignal S im Frequenzbereich von 50 MHz bis 200 MHz. Er ist mit dem Mikrocontroller $\mu$C verbunden und wird von ihm bezüglich Frequenz und Amplitude gesteuert. Dazu verfügt der Mikrocontroller $\mu$C über mehrere Digital/Analog-Wandler. Das Sendesignal wird über die Verbindungsleitung 3 zur Sonde 2 geführt. Hier wird die Sendespannung auf die oben beschriebene Weise gemessen.

Der in seine Halbwellen aufgeteilte Sendestrom wird wie bereits beschrieben nach der Strommessung wieder zusammengesetzt und als vollständiges Hochfrequenzsignal der Messimpedanz 6 und der parallel geschalteten Referenzimpedanz 7 zugeführt.

Da die Sendespannung ebenfalls bekannt ist, gilt nach dem ohmschen Gesetz:

$$Rmess = Umess \,/\, Imess.$$

Die Verbindungsleitung 3 kann abschnittsweise oder auch ganz aus Leiterbahnen auf einer ein- oder mehrlagigen Leiterplatte bestehen. Wie bereits oben ausgeführt, ist die Impedanz dieser Leitungen weitgehend unkritisch.

Die ohne äußere Beschaltung dargestellten Operations-Verstärker 5a und 5b dienen als Tiefpassfilter und zur Signalanpassung.

Der Mikrocontroller $\mu$C besitzt Analog/Digital-Wandler und liest die zu jeder Signalfrequenz gehörenden Strom- und Spannungswerte in seinen Speicher ein. So kann ein bestimmter Frequenzbereich um die zu erwartende Resonanzstelle der Messimpedanz 6 punktweise abgetastet werden. Natürlich können auch separate Analog/Digital-Wandler und externe Speicher verwendet werden.

Neben der Messimpedanz 6 werden die Lage der Resonanzfrequenz, sowie die Amplitude im Resonanzfall bewertet. Die Referenzimpedanz 7 bestimmt das Verhalten der Sonde 2 außerhalb der Resonanzfrequenz. Sie dient zur Kalibrierung und Temperaturkompensation.

Der Hochfrequenzgenerator 4 ist vorteilhaft ein spannungsgesteuerter Oszillator (VCO), dessen Amplitude anhand der vom Gleichrichter 8a in der Sonde 2 gemessenen Spannung regelbar ist. So kann das Sendesignal in der Sonde 2 bei verschiedenen Messfrequenzen konstant gehalten werden. Die Regelung erfolgt für alle Messfrequenzen (Messpunkte) mit dafür geeigneter Software im Mikrocontroller $\mu$C mit den folgenden Schritten:

- Strom- und Spannungssignale erfassen und digitalisieren
- Amplitude mit dem Zielwert vergleichen
- Amplitudensteuersignal aus einer im $\mu$C abgelegten Kennlinie berechnen
- Amplitudensteuersignal ausgeben
- Strom- und Spannungssignale erfassen und digitalisieren

Die Erfindung betrifft ein Füllstandsmessgerät zur Ermittlung des Füllstandes eines Mediums in einem Behälter mit einer Steuereinheit 1, die einen Hochfrequenzgenerator 4 zur Erzeugung eines Sendesignals S, einen ersten Verstärker 5a, einen zweiten Verstärker 5b und eine Auswerteeinheit $\mu$C enthält, und einer räumlich abgesetzten Sonde 2, die mit dem Sendesignal S beaufschlagt wird und eine Messimpedanz 6, eine Referenzimpedanz 7, einen ersten Gleichrichter 8a und einen zweiten Gleichrichter 8b enthält, sowie einer mehradrigen Verbindungsleitung 3 zur Signalübertragung zwischen der Steuereinheit 1 und der Sonde 2, wobei der erste Gleichrichter 8a die Spannung des Sendesignals S in der Sonde 3 erfasst und diese als erstes Gleichspannungssignal zur Steuereinheit 1 übertragen wird, der zweite Gleichrichter 8b den Sondenstrom in der Sonde 3 über Messwiderstände 9a, 9b in ein zweites Gleichspannungssignal umwandelt, und beide Gleichspannungssignale über die mehradrige Verbindungsleitung 3 der Steuereinheit 1 zur Ermittlung des Füllstands zugeführt werden, wobei die Gleichrichter 8a, 8b thermisch miteinander gekoppelt sind.

In einer vorteilhaften Ausgestaltung wird der Sondenstrom zur Messung in seine beiden Halbwellen zerlegt, die nach dem Durchlaufen der Messwiderstände 9a und 9b wieder zum vollständigen Hochfrequenzsignal zusammengesetzt und anschließend dem zu vermessendem Medium zugeführt.

Der erfindungsgemäße Füllstandssensor arbeitet vorteilhaft mit einem durchstimmbaren Hochfrequenzgenerator 4 in einem Frequenzbereich zwischen 50 und 200 MHz, ohne dass benachbarte Frequenzbereiche dadurch ausgeschlossen werden. Natürlich können auch mehrere Hochfrequenzgeneratoren 4 vorhanden sein.

Vorteilhafterweise sind die Messimpedanz 6 und die Referenzimpedanz 7 parallel geschaltet. Sie können aber auch durch hochfrequenztaugliche Analogumschalter zu oder abgeschaltet werden, um separate Messungen durchzuführen oder mehrere Resonanzstellen für unterschiedliche Medien zu erzeugen.

Bezugszeichenliste

| | |
|---|---|
| 1 | Steuereinheit |
| 2 | Sonde |
| 3 | Mehradrige Verbindungsleitung |
| 4 | Hochfrequenzgenerator |
| 5a | Erster Verstärker |
| 5b | Zweiter Verstärker |
| 6 | Messimpedanz |
| 7 | Referenzimpedanz |
| 8a | Erster Gleichrichter |
| 8b | Zweiter Gleichrichter |
| 9a | Erster Messwiderstand |
| 9b | Zweiter Messwiderstand |
| μC | Auswerteeinheit, Mikrocontroller |
| S | Hochfrequentes Sendesignal |

**Patentansprüche**

1. Füllstandsmessgerät zur Ermittlung des Füllstandes eines Mediums in einem Behälter mit einer Steuereinheit (1), die einen Hochfrequenzgenerator (4) zur Erzeugung eines Sendesignals S, einen ersten Verstärker (5a), einen zweiten Verstärker (5b) und eine Auswerteeinheit (μC) enthält,
und mit einer räumlich abgesetzten Sonde (2), die mit dem Sendesignal S beaufschlagt wird und die eine Messimpedanz (6), eine Referenzimpedanz (7), einen ersten Gleichrichter (8a) und einen zweiten Gleichrichter (8b) sowie Messwiderstände (9a, 9b) enthält,
und mit einer mehradrigen Verbindungsleitung (3), die zur Signalübertragung zwischen der Steuereinheit (1) und der Sonde (2) dient,
**dadurch gekennzeichnet, dass**

die Verstärker (5a, 5b) ausgangsseitig mit der Auswerteeinheit μC verbunden sind und zur Verstärkung von über die mehradrige Verbindungsleitung (3) zur Steuereinheit (1) übertragenen Gleichspannungen dienen,
wobei der erste Gleichrichter (8a) die Spannung des Sendesignals S in der Sonde (2) erfasst
und diese als erstes Gleichspannungssignal über die mehradrige Verbindungsleitung (3) zur Steuereinheit (1) überträgt,
wobei der zweite Gleichrichter (8b) den Sondenstrom in seine beiden Halbwellen zerlegt, so dass über den beiden Messwiderständen (9a, 9b) ein zweites Gleichspannungssignal entsteht,
der in seine Halbwellen zerlegte Sondenstrom am gemeinsamen Anschluss der Messwiderstände (9a, 9b) wieder zusammengesetzt und als Hochfrequenzsignal der Messimpedanz (6) und dem Medium, sowie der Referenzimpedanz (7) zur Kalibrierung zugeführt wird,
wobei das zweite Gleichspannungssignal über die mehradrige Verbindungsleitung (3) der Steuereinheit (1) zugeführt wird,
wobei die Gleichrichter (8a, 8b) thermisch miteinander gekoppelt sind.

**Claims**

1. Fill level measuring device for determining the fill level of a medium in a container comprising a control unit (1), which contains a radiofrequency generator (4) for generating a transmission signal S, a first amplifier (5a), a second amplifier (5b) and an evaluation unit (μC), and comprising a physically offset probe (2), to which the transmission signal S is applied and which contains a measuring impedance (6), a reference impedance (7), a first rectifier (8a) and a second rectifier (8b) as well as shunts (9a, 9b), and comprising a multiple-core connecting line (3), which is used for signal transmission between the control unit (1) and the probe (2), **characterized in that** the amplifiers (5a, 5b) are connected on the output side to the evaluation unit μC and are used for amplifying DC voltages transmitted via the multiple-core connecting line (3) to the control unit (1), wherein the first rectifier (8a) detects the voltage of the transmission signal S in the probe (2) and transmits said voltage as first DC voltage signal via the multiple-core connecting line (3) to the control unit (1), wherein the second rectifier (8b) breaks the probe current down into its two half-cycles so that a second DC voltage signal is produced across the two shunts (9a, 9b), the probe current broken down into its half-cycles is combined again at the common connection of the shunts (9a, 9b) and is supplied as radiofrequency signal to the measuring impedance (6) and the medium and to the reference impedance (7) for calibration, wherein the second DC voltage signal is supplied via the multiple-core connecting line (3) to the control unit (1), wherein the rectifiers (8a, 8b) are thermally coupled to one another.

## Revendications

1. Appareil de mesure du niveau destiné à déterminer le niveau d'un fluide dans un récipient, comprenant une unité de commande (1) qui contient un générateur de hautes fréquences (4) destiné à générer un signal d'émission S, un premier amplificateur (5a), un deuxième amplificateur (5b) et une unité d'interprétation ($\mu$C),
et comprenant une sonde (2) décalée dans l'espace, laquelle est alimentée avec le signal d'émission S et contient une impédance de mesure (6), une impédance de référence (7), un premier redresseur (8a) et un deuxième redresseur (8b) ainsi que des résistances de mesure (9a, 9b),
et comprenant un câble de liaison multiconducteur (3) qui sert à la transmission de signaux entre l'unité de commande (1) et la sonde (2),
**caractérisé en ce que**
les amplificateurs (5a, 5b) sont reliés du côté de la sortie à l'unité d'interprétation ($\mu$C) et servent à amplifier des tensions continues transmises sur le câble de liaison multiconducteur (3) vers l'unité de commande (1),
le premier redresseur (8a) collectant la tension du signal d'émission S dans la sonde (2)
et transmettant celle-ci sous la forme d'un premier signal de tension continue sur le câble de liaison multiconducteur (3) vers l'unité de commande (1),
le deuxième redresseur (8b) décomposant le courant de sonde en ses deux demi-ondes, de sorte qu'un deuxième signal de tension continue se produise aux bornes des deux résistances de mesure (9a, 9b),
le courant de sonde décomposé en ses demi-ondes étant de nouveau assemblé au niveau de la borne commune des résistances de mesure (9a, 9b) et étant acheminé sous la forme d'un signal à haute fréquence à l'impédance de mesure (6) et au fluide, ainsi qu'à l'impédance de référence (7) en vue du calibrage,
le deuxième signal de tension continue étant acheminé à l'unité de commande (1) sur le câble de liaison multiconducteur (3),
les redresseurs (8a, 8b) étant couplés thermiquement l'un à l'autre.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008027921 B4
- US 4259865 A
- US 6107924 A